# EUROPÄISCHE PATENTSCHRIFT

(11) **EP 0 477 704 B1**
(45) Veröffentlichungstag und Bekanntmachung des Hinweises auf die Patenterteilung: **23.07.1997**
(21) Anmeldenummer: 91115627.1
(22) Anmeldetag: 14.09.1991
(51) Int. Cl.: F16L 33/207

(54) **Rohrpresskupplung**
Contracted pipecoupling
Raccord comprimé pour tuyaux

(30) Priorität: 25.09.1990 DE 4030323
(43) Veröffentlichungstag der Anmeldung: 01.04.1992
(73) Patentinhaber: Knipping, Daniel, D-44797 Bochum (DE)
(72) Erfinder: Knipping, Daniel, D-44797 Bochum (DE); Boss, Hans, CH-8707 Uetikon a. See (CH)
(74) Vertreter: Bonsmann, Manfred, Dipl.-Ing.

(56) Entgegenhaltungen:
- GB-A- 640 090
- GB-A- 828 912
- US-A- 2 437 933

## Beschreibung

Die Erfindung bezieht sich auf eine Rohrpreßkupplung.

Aus der GB-A-828 912 ist eine Rohrpreßkupplung bekannt, bei der auf ein Rohrende zwei Überwurfpreßringe axial aufgeschoben werden, von denen einer radial innen und der andere radial außen liegt und deren einander zugewandte Umfangsflächen zur Ausbildung einer Keilverbindung gleichsinnig geneigt sind, und in das Rohrende eine am Außenumfang profilierte Stützhülse eingesetzt wird. Im Längsschnitt gesehen ist dabei die Außenseite des Rohrendes von einem sich in Längsrichtung über das Stirnende des Rohrendes erstreckenden Kupplungsteil umgeben. Die Rohrpreßkupplung wird dadurch am Rohrende befestigt, daß die beiden Überwurfpreßringe im Bereich der Stützhülse übereinander geschoben werden, wodurch das Rohrende zwischen Stützhülse und Überwurfringen verklemmt wird. Diese Verbindung ist in Herstellung und Montage relativ aufwendig.

Ähnlich aufwendige Kupplungsstücke sind der GB-A-640 090, gemäß der ein Überwurfring den das Rohrende umgebenden Kupplungsteil bildet, und der US-A-2 437 933 zu entnehmen, gemäß der eine Stützhülse in ein Rohrende eingesetzt wird, das Rohrende von einem Kupplungsteil umgeben ist und auch ein Überwurfring vorgesehen ist. Hierbei tritt noch die Schwierigkeit auf, daß das Rohrende zwischen Stützhülse und Kupplungsteil eingefädelt werden muß.

Demgegenüber liegt der Erfindung die Aufgabe zugrunde, verbesserte Ausgestaltungen derartiger Rohrpreßkupplungen vorzuschlagen, insbesondere für die Herstellung von Kupplungen an Rohren aus weichen Werkstoffen, wie weichen Metallen und nichtmetallischen Materialien, auch solchen mit Karkassen sowie auch von Verbund-Mehrschichtrohren, beispielsweise Rohren, deren Wandungen aus abwechselnden Schichten Kunststoff-Metall-Kunststoff aufgebaut ist.

Erfindungsgemäß wird diese Aufgabe durch die Gemeinsamkeit aller Merkmale des Anspruches 1 gelöst.

Hierbei werden in vorteilhafter Weise die Rohrenden formschlüssig umfaßt. Damit ist gleichzeitig auch ein verbesserter Korrosionsschutz in der Richtung "von außen nach innen" gegeben.

In den Unteransprüchen sind weitere zweckmäßige Ausgestaltungen der Erfindung beschrieben. Weitere Vorteile der Erfindung ergeben sich aus der nachfolgenden Beschreibung der in den Zeichnungen dargestellten Ausführungsbeispiele. Es zeigen:
- Fig. 1: einen Teil-Längsschnitt durch ein Ausführungsbeispiel der erfindungsgemäßen Rohrkupplung in verpreßtem Zustand;
- Fig. 2 und Fig. 3: eine Detaildarstellung eines Abschnittes des Preßrinqes bzw. des Stützringes gemäß Fig. 1;
- Fig. 4: eine Detaildarstellung einer weiteren Ausführungsform der Ausgestaltung gemäß Fig. 1;
- Fig. 5: eine schematische Darstellung einer mit einer Verdrehsicherung ausgestalteten Stützhülse;
- Fig. 6: eine schematische Darstellung des Verbindungsbereiches einer weiteren Ausführungsform der erfindungsgemäßen Rohrpreßkupplng.

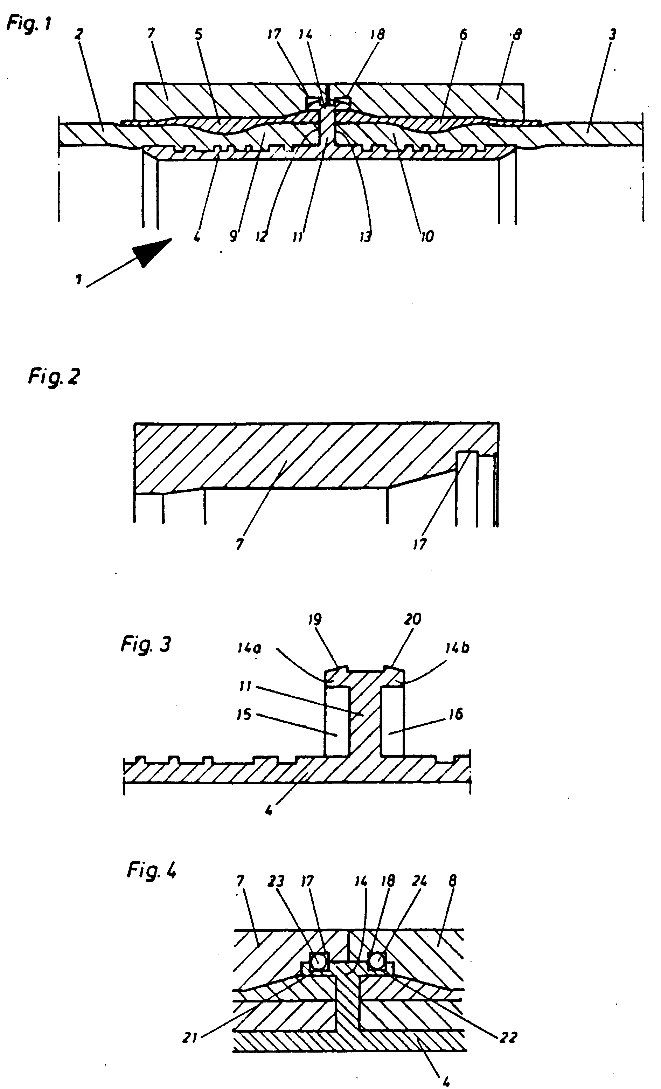

Eine Rohrpreßkupplung gemäß Fig. 1 zum Verbinden von Rohren 2 und 3 weist eine Stützhülse 4, zwei Quetschhülsen 5 und 6 und zwei Preßringe 7 und 8 auf. Die Rohrkupplung ist in verpreßtem Zustand gezeigt. Die Stützhülse 4 nimmt die beiden Rohrenden 9 und 10 auf und ist mit einem äußeren radialen Anschlagflansch 11 versehen, gegen den die Stirnenden 12 und 13 der Rohrenden 9 und 10 anliegen. Die Außenseiten der Rohrenden sind von sich in Längsrichtung über die Stirnenden der Rohrenden erstreckenden Kupplungsteilen umgeben, die durch einen axialen Ring 14 gebildet werden, der vom Anschlagflansch 11 in beide Axialrichtungen abragt, so daß beiderseits des Anschlagflansches 11 Nuten 15, 16 gebildet werden, in der sich jeweils das Rohrende 9 und 10 befindet. Die jeweiligen Axialbereiche des Ringes 14 sind mit 14a bzw. 14b bezeichnet.

Die Preßringe 7 und 8 weisen jeweils eine innere Ringnut 17 bzw. 18 auf. Der Ring 14 weist Umfangsrippen 19, 20 auf, die in die jeweilige Ringnut 17 bzw. 18 einrasten.

Aufgrund des Einrastens der Umfangsrippen wird eine axiale Arretierung erreicht.

Fig. 4 zeigt eine weitere Ausgestaltung, bei der die Preßringe 7 und 8 ebenfalls Ringnuten 17 und 18 aufweisen. Der Ring 14 der Stützhülse 4 weist bei dieser Ausführungsform jedoch keine Umfangsrippen auf, sondern äußere Ringnuten 21, 22, in denen je eine Ringfeder 23, 24 enthalten ist. Wie ersichtlich, rastet die Ringfeder 23 in die gegenüberliegenden Ringnuten 17 und 21 ein. Entsprechend rastet die Ringfeder 24 in die gegenüberliegenden Ringnuten 18 und 22 ein. Auch hierdurch wird eine Arretierung in axialer Richtung erreicht.

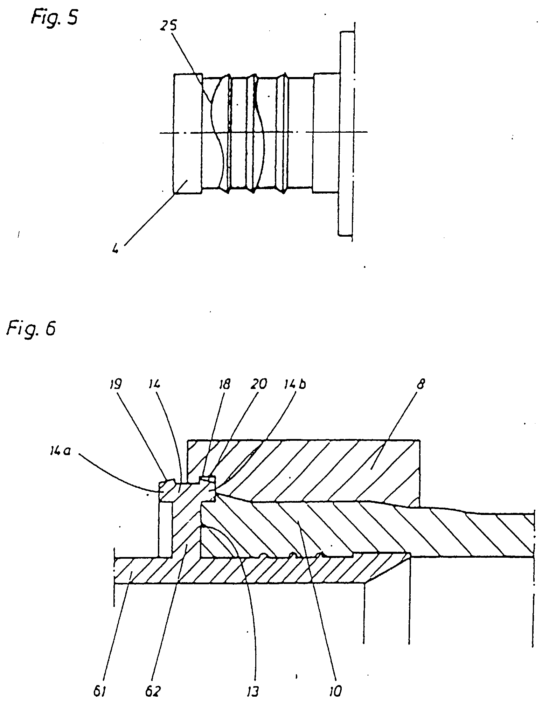

Aus Fig. 1 ist ersichtlich, daß die Stützhülse 4 an ihrem Außenumfang eine Profilierung aufweist. In Fig. 5 ist ein Abschnitt der Profilierung einer Stützhülse 4 beispielhaft dargestellt. Wie ersichtlich, kann die Profilierung über den Umfang gesehen wenigstens einen in axialer Richtung weisenden Vorsprung 25 aufweisen. Damit wird eine Arretierung auch in radialer Richtung erreicht.

Die Quetschhülsen 5, 6 können an ihrer Innenwand ringförmige Nuten aufweisen. Die ringförmigen Nuten verkrallen sich bei der Verpressung in die Außenwand des Rohrmaterials und wirken dichtend, vorzugsweise bei weichen Rohr- und Schlauchmaterialien sowie in axialer Richtung arretierend.

Bei dem in Fig. 6 schematisch dargestellten weiteren Ausführungsbeispiel ist eine Stützhülse mit 61 bezeichnet, die wiederum einen äußeren radialen Anschlagflansch 62 aufweist, gegen welche das Stirnende 13 eines Rohrendes 10 anliegt. Der Anschlagflansch 62 geht an seinem radialen äußeren Ende in einen axialen Ring 14 über, welcher axial abragende Bereiche 14a und 14b aufweisen. Diese weisen Umfangsrippen 19, 20 auf, die in jeweils eine Ringnut des Überwurfpreßringes einrasten. Es ist lediglich ein Überwurf-Preßring 8 mit einer Ringnut 18 dargestellt. Die Stützhülse 61 weist an ihrem Außenumfang Profilierungen auf, und zwar sowohl in radialer als auch in axialer Richtung.

Bei dem Ausführungsbeispiel gemäß Fig. 6 ist im nicht verpreßten Zustand der Außendurchmesser der Stützhülse 61 größer als der Innendurchmesser des Rohrendes 10. Vor dem Einführen des Rohrendes auf die Stützhülse wird das Rohrende aufgeweitet und der jeweilige Überwurf-Preßring in axialer Richtung aufgeschoben, bis der Einrast-Schnapp-Vorgang erfolgt ist, wodurch der Überwurf-Preßring seine lagesichernde Position erreicht hat und durch das Eindringen des Rohrmaterials in die Vertiefungen auf der Außenseite der Stützhülse in axialer und in radialer Richtung eine feste Lage erreicht ist.

Es versteht sich, daß eine derartige Rohrpreßkupplung ohne Quetschhülse nicht nur bei der in Fig. 6 dargestellten Ausführungsform realisiert werden kann, sondern auch beispielsweise bei den anhand von Fig. 1 bis Fig. 4 erläuterten weiteren Ausführungsbeispielen.

## Patentansprüche

1. Rohrpreßkupplung, bei der zwei Rohrenden mittels zweier axial aufgeschobener Überwurf-Preßringe und einer in die beiden Rohrenden eingesetzten, am Außenumfang profilierten Stützhülse, die einen äußeren radialen Anschlagflansch für die beiden Rohrenden aufweist, verbunden sind, wobei im Längsschnitt gesehen die Außenseiten der beiden Rohrenden (9, 10) von einem sich in Längsrichtung über die Stirnenden der beiden Rohrenden erstreckenden Kupplungsteil (14) umgeben sind, und das radial äußere Ende des Anschlagflansches (11) in einen das Kupplungsteil bildenden axialen Ring (14) übergeht, der vom Anschlagflansch in beide Axialrichtungen abragt, so daß beiderseits des Anschlagflansches eine Nut (15, 16) gebildet wird, in der sich je ein Rohrende (9, 10) befindet, und die Überwurf-Preßringe (7, 8) je eine innere Ringnut (17, 18) aufweisen, und der Ring (14) zwei Umfangsrippen (19, 20) oder äußere Ringnuten (21, 22), in denen je eine Ringfeder (23, 24) enthalten ist aufweist, die in die jeweilige Ringnut einrasten.

2. Rohrpreßkupplung nach Anspruch 1, dadurch gekennzeichnet, daß sich jeweils zwischen einem Überwurf-Preßring (7, 8) und einem Rohrende eine Quetschhülse (5, 6) befindet, und daß die radiale Höhe der Nuten (15, 16) für die zusätzliche Aufnahme der Quetschhülsen bestimmt ist.

3. Rohrpreßkupplung nach Anspruch 1 oder 2, dadurch gekennzeichnet, daß zur Arretierung in radialer Richtung die Profilierung der Stützhülse (4) über den Umfang gesehen wenigstens einen in axialer Richtung weisenden Vorsprung (25) und wenigstens eine in axialer Richtung weisende Ausnehmung und/oder eine beispielsweise durch Rändeln oder Kordieren hergestellte Oberflächenprofilierung aufweist.

4. Rohrpreßkupplung nach einem der Ansprüche 1 bis 3, dadurch gekennzeichnet, daß sich der Außendurchmesser der Stützhülse von deren Stirnenden bis zu dem radialen Anschlagflansch leicht konisch verändert.

5. Rohrpreßkupplung nach einem der Ansprüche 1 bis 4, dadurch gekennzeichnet, daß in dem Bereich zwischen der Stützhülse und der Innenwandung des Rohrendes wenigstens ein O-Ring angeordnet ist.

6. Rohrpreßkupplung nach einem der Ansprüche 1 bis 5, dadurch gekennzeichnet, daß zwischen dem Anschlagflansch und der Stirnseite des Rohrendes ein elektrochemische Reaktionen verhindernder Zwischenring bzw. eine Zwischenscheibe vorgesehen ist.

7. Rohrpreßkupplung nach einem der Ansprüche 4 bis 6, dadurch gekennzeichnet, daß die Quetschhülse (5, 6) an ihrer Innenwand ringförmige Nuten aufweist.

## Claims

1. A compression pipe coupling in which two pipe ends are connected by means of two compression cap rings which are axially pushed on, and a support sleeve which is inserted into the two pipe ends and which is profiled at the outer periphery and which has an outer radial abutment flange for the two pipe ends, wherein as viewed in longitudinal section the outsides of the two pipe ends (9, 10) are surrounded by a coupling portion (14) extending in the longitudinal direction over the end faces of the two pipe ends and the radially outer end of the abutment flange (11) goes into an axial ring (14) which forms the coupling portion and which projects from the abutment flange in both axial directions so that formed on both sides of the abutment flange is a groove (15, 16) in which a respective pipe end (9, 10) is disposed and the compression cap rings (7, 8) each have a respective inner annular groove (17, 18) and the ring (14) has two peripheral ribs (19, 20) or outer annular grooves (21, 22) in each of which a respective annular spring (23, 24) is contained, the peripheral ribs or annular springs engaging into the respective annular groove.

2. A compression pipe coupling according to claim 1 characterised in that a respective pinch sleeve (5, 6) is disposed between a compression cap ring (7, 8) and a pipe end and that the radial height of the grooves (15, 16) is defined for additionally accommodating the pinch sleeves.

3. A compression pipe coupling according to claim 1 or claim 2 characterised in that for the purposes of arresting in a radial direction the profiling of the support sleeve (4) as viewed over the periphery thereof has at least one projection (25) facing in the axial direction and at least one recess facing in the axial direction and/or a surface profiling produced for example by knurling or milling.

4. A compression pipe coupling according to one of claims 1 to 3 characterised in that the outside diameter of the support sleeve varies slightly conically from the end faces thereof to the radial abutment flange.

5. A compression pipe coupling according to one of claims 1 to 4 characterised in that at least one O-ring is arranged in the region between the support sleeve and the inside wall of the pipe end.

6. A compression pipe coupling according to one of claims 1 to 5 characterised in that an intermediate disc or an intermediate ring for preventing electrochemical reactions is provided between the abutment flange and the end face of the pipe end.

7. A compression pipe coupling according to one of claims 4 to 6 characterised in that the pinch sleeve (5, 6) has annular grooves at its inside wall.

## Revendications

1. Raccord comprimé pour tuyaux, selon lequel deux extrémités de tuyaux sont assemblées au moyen de deux bagues de raccordement comprimé enfilées axialement et d'une douille de soutien insérée dans les deux extrémités de tuyaux, profilée sur la circonférence extérieure et présentant un collet de butée radial extérieur pour les deux extrémités de tuyaux, les côtés extérieurs des deux extrémités de tuyaux (9, 10) étant, en vue en coupe longitudinale, entourés par un élément d'accouplement (14) s'étendant en direction longitudinale sur les extrémités frontales des deux extrémités de tuyaux, et l'extrémité radialement extérieure du collet de butée (11) se poursuivant par une bague axiale (14) constituant l'élément d'accouplement, qui fait saillie du collet de butée dans les deux directions axiales, de sorte qu'une rainure (15, 16), dans laquelle se trouve une extrémité de tuyau respective (9, 10), est formée de part et d'autre du collet de butée, et les bagues de raccordement comprimé (7, 8) présentant chacune une rainure annulaire intérieure (17, 28), tandis que la bague (14) présente deux nervures circonférentielles (19, 20), ou deux rainures annulaires extérieures (21, 22) dans chacune desquelles est contenu un ressort annulaire (23, 24), les nervures ou ressorts s'enclenchant dans les rainures annulaires respectives des bagues de raccordement.

2. Raccord comprimé pour tuyaux selon la revendication 1, caractérisé en ce qu'une douille déformable respective (5, 6) se trouve entre une bague de raccordement comprimé (7, 8) et une extrémité de tuyau, et en ce que la hauteur radiale des rainures (15, 16) est prévue pour recevoir en plus les douilles déformables.

3. Raccord comprimé pour tuyaux selon la revendication 1 ou 2, caractérisé en ce qu'en vue du blocage en direction radiale, le profilage de la douille de soutien (4) présente, vu sur la circonférence, au moins une saillie (25) dirigée en direction axiale et au moins un évidement dirigé en direction axiale, et/ou un profilage de surface réalisé, par exemple, par moletage ou cordonnage.

4. Raccord comprimé pour tuyaux selon une des revendications 1 à 3, caractérisé en ce que le diamètre extérieur de la douille de soutien se modifie par une légère conicité depuis ses extrémités frontales jusqu'au collet de butée radial.

5. Raccord comprimé pour tuyaux selon une des revendications 1 à 4, caractérisé en ce qu'au moins un anneau torique est disposé dans la région située entre la douille de soutien et la paroi intérieure de l'extrémité de tuyau.

6. Raccord comprimé pour tuyaux selon une des revendications 1 à 5, caractérisé en ce qu'une bague intermédiaire ou une rondelle intermédiaire, empêchant les réactions électrochimiques, est prévue entre le collet de butée et le côté frontal de l'extrémité de tuyau.

7. Raccord comprimé pour tuyaux selon une des revendications 4 à 6, caractérisé en ce que la douille déformable (5, 6) présente des rainures annulaires sur sa paroi intérieure.
